# EUROPEAN PATENT SPECIFICATION

(11) **EP 1 007 391 B1**
(45) Date of publication and mention of the grant of the patent: **07.06.2006**
(21) Application number: 98940843.0
(22) Date of filing: 12.08.1998
(51) Int. Cl.: B60R 16/02

(54) **VEHICLE DISPLAY SYSTEM USING ICONS**
SINNBILDER BENUTZENDES KRAFTFAHRZEUGANZEIGESYSTEM
SYSTEME AFFICHEUR A ICONES POUR VEHICULE

(30) Priority: 26.08.1997 US 69883 P; 30.10.1997 US 961361
(43) Date of publication of application: 14.06.2000
(73) Proprietor: Lear Automotive Dearborn, Inc., Dearborn, Michigan 48126 (US)
(72) Inventor: TOFFOLO, Daniel, Wilton, CT 06897 (US); PALALAU, Silviu, Birmingham, MI 48004 (US); BORZEA, Marian, Farmington Hills, MI 48334 (US); ROGERS, William, Soffield, CT 06078 (US); BACELLAR, Luiz, F., H., South Glastonbury, CT 06073 (US)
(74) Representative: Casey, Lindsay Joseph
(86) International application number: PCT/US1998/016670
(87) International publication number: WO 1999/010203

(56) References cited:
- EP-A- 0 675 341
- WO-A-97/13657
- WO-A-98/13224
- DE-A- 4 033 832
- US-A- 5 555 502
- US-A- 5 648 755
- US-A- 5 951 621
- KNOLL P M ET AL: "ADVANCED INTEGRATED DRIVER INFORMATION SYSTEMS" MEASUREMENT AND CONTROL, vol. 25, no. 9, 1 November 1992, pages 264-268, XP000320446

## Description

### BACKGROUND OF THE INVENTION

The present invention relates generally to displays, and more particularly to a vehicle display system having a plurality of display areas, each selectively displaying one of a plurality of locally-stored graphics based upon information received on a vehicle bus.

Vehicle manufacturers are increasingly using high-resolution, reconfigurable displays in vehicles to present vehicle information, such as turn-by-turn navigation information from a navigation system. High-resolution reconfigurable displays are aesthetically desirable and convey a high-tech image to the consumer. However, it is not currently possible to send high-resolution graphics from an electronic vehicle device to a display via the standard vehicle bus (e.g. J1850 can, etc.). Current vehicle buses are unable to handle the bandwidth which would be required to transmit high resolution images from the navigation system to the display. Moreover, high data transmission rates across the vehicle bus for graphical displays would substantially interfere with communication between other vehicle components on the vehicle bus.

WO 97/13657 A1 discloses a display system according to the preamble of claim 1.

### SUMMARY OF THE INVENTION

According to an aspect of the present invention, there is provided a display system as specified in claim 1.

The present invention provides a high-resolution display system, particularly for use in a vehicle, comprising an input device sending information to a display unit on a vehicle bus, such as the J1850. The display includes a local memory containing a plurality of "icons" which are selected based upon information received via the vehicle bus. Since the icons are not transmitted via the vehicle bus, but rather a local bus between the local memory and the display, the icons preferably comprise high-resolution graphics. One of the plurality of icons is selected based upon the information from the input device. The selected icon is then transmitted from the local memory over the local bus to the display. As a result, the high-resolution data need not be transmitted over the vehicle bus.

In one embodiment, the vehicle input device is a navigation system. Preferably the display includes a first display area selectively displaying one of a plurality of first icons and a second display area selectively displaying one of a plurality of second icons. The first icons present different types of intersections, such as four way intersections, "T" intersections, "Y" intersections, freeway entrances/exits, etc. Based upon the information from the navigation system, the display selects a first icon representing the type of intersection for the next turn and displays it in the first display area. Simultaneously, based upon information from the navigation system regarding the geographical heading of the vehicle, the display selects one of the second icons indicating the current vehicle heading and displays it in the second display area.

### BRIEF DESCRIPTION OF THE DRAWINGS

The above, as well as other advantages of the present invention, will become readily apparent to those skilled in the art from the following detailed description of a preferred embodiment when considered in the light of the accompanying drawings in which:
Figure 1 is a schematic of the display system of the present invention;
Figure 2 is a sample image from the display of Figure 1;
Figure 3 is another sample image of the display of Figure 1;
Figure 4 is a schematic which could be used as an alternative to that shown in Figure 1.

### DETAILED DESCRIPTION OF A PREFERRED EMBODIMENT

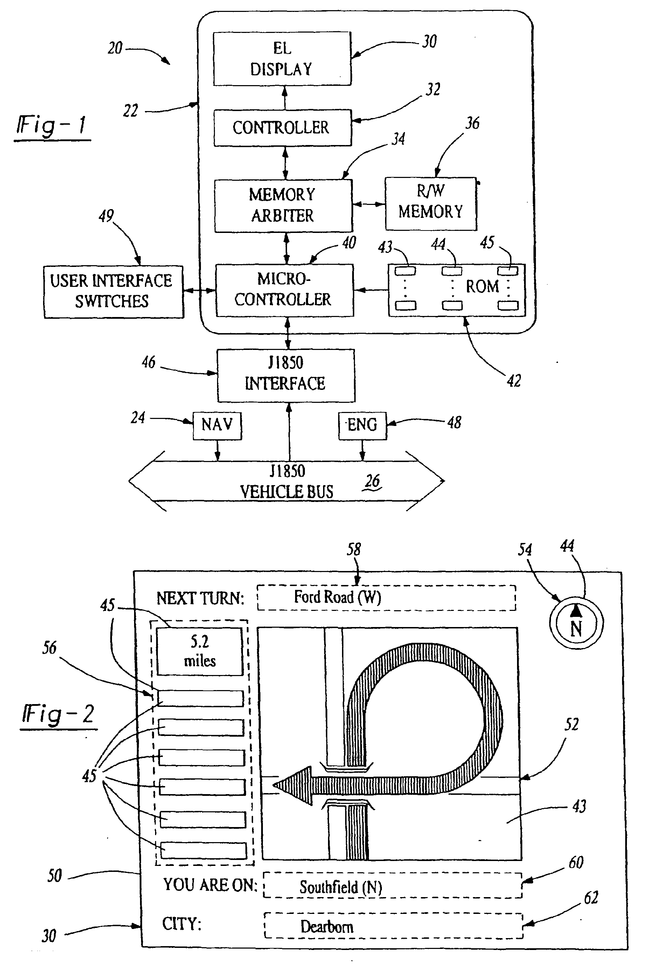

Figure 1 illustrates a schematic of a vehicle display system 20 according to the present invention. The vehicle display system 20 generally comprises a display unit 22 receiving information from an input device 24, such as a navigation system 24, via a vehicle bus. As is known, the vehicle bus, preferably the J1850 standard vehicle bus or an I-bus, carries information among numerous electrical components, sensors and controls in the vehicle. Although the display system 20 of the present invention could be utilized in applications outside of a vehicle, it is the use of the standard vehicle bus 26 to communicate information between the navigation system 24 and the display unit 22 which best illustrates the advantages of the present invention. However, it should be recognized that the display system 20 of the present invention could also be utilized in other applications.

The display unit 22 includes a display 30, such as an electroluminescent display, or any other high-resolution reconfigurable, preferably color, display. The display 30 is operated by a controller 32, which may include the column and row drivers for the electroluminescent display 30. As is known, the display 30 comprises a matrix of pixels, each individually addressable by activation of row and column drivers in the controller 32. Each pixel in the display 30 is activated according to information received from the memory arbiter 34. The memory arbiter 34 addresses pixel-by-pixel information stored in frame memory 36 and sends it to the controller 32 for display on display 30. The memory arbiter 34 also periodically stores graphical information received from microcontroller 40 in frame memory 36 . The microcontroller 40 selectively addresses read-only memory 42, preferably flash memory 42, in order to access a plurality of first icons 43, a plurality of second icons 44, and a plurality of third icons 45, all of which will be described in more detail below. The microcontroller 40 receives information from the vehicle bus 26 via the bus interface 46. The bus interface 46 may be incorporated into the microcontroller 40. As is known, other vehicle components, such as the engine controller 48 send and receive information via the vehicle bus 26.

In operation, the navigation system 24 sends information via vehicle bus 26 and bus interface 46 to the microcontroller 40. The microcontroller 40 addresses a selected one of the plurality of first icons 43, a selected one of the plurality of second icons 44, and a selected one of the plurality of third icons 45. The selected first, second and third icons are then sent by the microcontroller 40 to the memory arbiter 34 and stored in frame memory 36 and displayed on display 30 as will be described below. Some of the information received by the microcontroller 40 from the navigation system 24 via the vehicle bus 26 is converted to text format and sent to the memory arbiter 34 by the microcontroller 40, for display on display 30.

The microcontroller 40 preferably receives input from a plurality of user switches 49, such as a graphical user interface, for indicating preferences such as brightness, color etc. The icons 43-45 generally comprise graphical information for display on display 30, such as pixel-by-pixel display information, or bit-mapped format. Other formats could also be utilized.

A sample image 50 displayed by display 30 is shown in Figure 2. The display preferably includes a first display area 52 in which is selectively displayed a selected one of the plurality of first icons 43. There are preferably at least twenty available first icons 43 illustrating different types of intersections such as four way intersections, "T" intersections, "Y" intersections, freeway entrances/exits, etc.. The selected first icon 43 indicates the type of intersection identified with the next turn in the route guidance instructions from the navigation system 24. The first icon 43 is selected based upon the information from the navigation system 24.

The display 30 further includes a second display area 54 in which is selectively displayed one of the second icons 44 indicating geographical heading of the vehicle. There are preferably a total of eight second icons 44, i.e. north, northeast, east, southeast, south, southwest, west, northwest. The second icon 44 is selected based upon information from the navigation system 24.

The display 30 further includes a third display area 56 which is preferably a proximity indicator indicating the distance to the next turn in the route guidance instructions from the navigation system 24. The proximity indicator 56 preferably comprises a plurality of third icons 45 which are sequentially deleted as the vehicle nears the next turn required by the navigation system 24. The third icon 45 is selected based upon information from the navigation system 24. The proximity indicator is described in further detail in later published US-A- 5 951 621.

The display 30 preferably further includes a plurality of text display areas, including a next turn field 58, indicating the name of the road and geographical heading for the next turn, according to the navigation system 24. This information is received from the navigation system 24 and displayed in display 30 as text information.

The display 30 further includes a current road field 60 indicating the name of the road on which the vehicle is currently located and geographical heading, as determined by the navigation system 24, communicated through vehicle bus 26 and indicated to the display 30 as text. The display 30 includes a similar current city field 62, which is again a text field indicating the name of the city in which the vehicle is currently located, as determined by the navigation system 24. The city field 62 information is preferably transmitted by the navigation system 24 via the vehicle bus 26 and displayed by display 30.

In operation, referring to Figures 1 and 2, the navigation system 24 generates current vehicle heading, next turn road name and heading, current road name and heading, current city name, next intersection type and proximity to next turn information. This information is transmitted via the vehicle bus 26 to the display unit 22. The information is received by the J1850 interface 46 and received by the microcontroller 40. The microcontroller 40 utilizes the next intersection type information to index the first plurality of icons 43 and select one of the available intersection type icons 43. The microcontroller 40 also indexes the flash memory 42 to select one of the plurality of second icons 44, utilizing the current vehicle heading information, to select the icon 44 indicating the current vehicle heading. The microcontroller 40 indexes the flash memory 42 utilizing the proximity information to selectively address one or more of the plurality of third icons 45, graphically indicating the proximity of the next turn. The selected first, second and third icons 43-45 are transmitted by the microcontroller 40 to the memory arbiter 34 and stored in frame memory 36. The frame memory 36 is mapped to the display 30; therefore the selected first icon 43 is stored in a portion of the frame memory 36 corresponding to the first display area 52 of the display 30. Similarly, the selected second icon 44 is selectively stored in that portion of the frame memory 36 corresponding to the second display area 54 of the display 30. The selected third icon 45 is selectively stored in the frame memory 36 in the location corresponding to the third display area 56 of the display 30. The text information, specifically, the next turn field 58, current road field 60 and current city field 62 is converted to bitmapped text by the microcontroller 40 and passed from the microcontroller 40 to the memory arbiter 34 and stored in the appropriate locations 36 in the frame memory 36. The memory arbiter 34 sends pixel-by-pixel information to the controller 32 which controls the display 30 to display information stored in frame memory 36.

The display system 20 of the present invention can provide a high resolution, reconfigurable display 30, displaying high resolution, reconfigurable information based upon information from the navigation system 24. The high resolution information does not pass from the navigation system 24 to the display unit 22 via the vehicle bus 26. Rather, only sufficient identifying information sufficient to index each of the plurality of icons 43-45 need be transmitted to the display unit 22 via the vehicle bus 26. Since the local frame memory 36 is connected to the memory arbiter 34 and controller 32 of the display 30 via a local bus which is not shared with numerous other vehicle components high resolution information can be quickly sent from frame memory 36 to the display 30.

Although the display system 20 of the present invention has been described with respect to vehicles, it should be recognized that the display system 20 of the present invention would have other applications as well. However, the vehicle bus 26 best illustrates the problem overcome by the present invention.

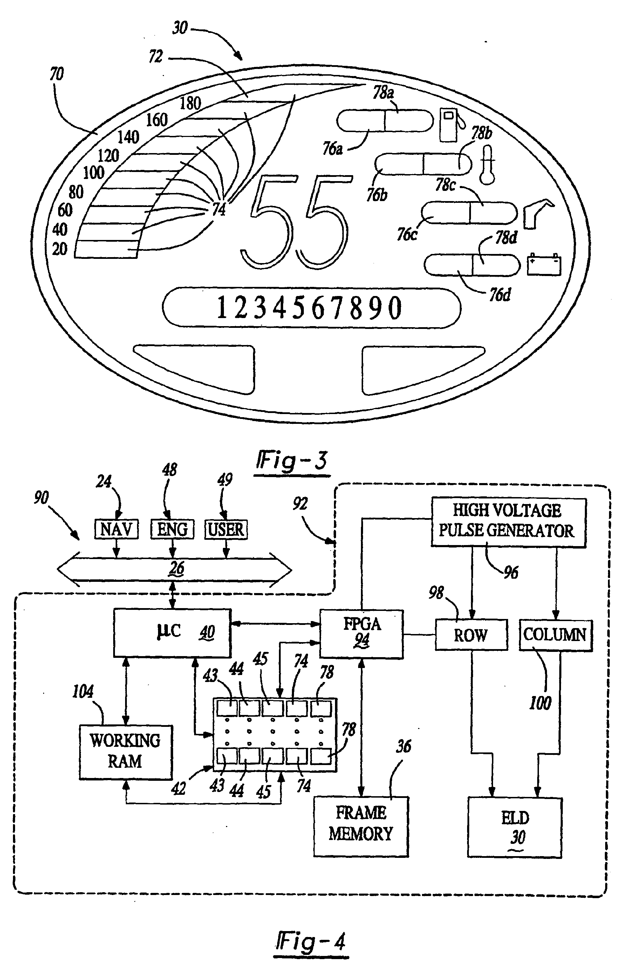

An alternate image 70 as shown in Figure 3 can be displayed by display 30 in place of, or alongside the image 50 of Figure 2. The image 70 includes a first display area 72 graphically indicating the speed of the vehicle by selectively displaying one of a plurality of speed icons 74. Image 70 further includes a plurality of gauge display areas 76a-d each displaying one of a plurality of available gauge icons 78a-d. The icons 74, 78 are selected as described above based upon information received from the engine controller 48 and displayed in the first display area 72 and gauge display areas 76a-d. Bitmaps of the icons 74, 78 are stored in flash memory 42 (Figure 1).

Figure 4 illustrates a schematic of an alternative display system 90 according to the present invention which could be utilized in place of the schematic of Figure 1. The display system 90, similar to that shown in Figure 1, includes a display unit 92 receiving information via a vehicle bus 26 from a navigation system 24 and an engine controller 48. The user interface switches 49 also send information via the bus 26. The vehicle bus 26 could comprise a J-1850 bus, an I-bus or equivalents. The display unit 92 also includes the display 30 which is preferably an ELD (Electroluminescent Display) 30. The display unit 92 includes the microcontroller 40, which is preferably a C-165. The microcontroller 40 preferably includes the bus interface 46 (not shown). The microcontroller 40 selectively accesses a flash memory 42 which includes the icons 43, 44, 45, 74, 78 such as described above with respect to Figures 1-3. The display unit 92 further includes the frame memory 36 which is mapped pixel-by-pixel to the ELD 30.

The display unit 92 includes a FPGA (Field Programmable Gate Array) 94 which has direct memory access to the flash memory 42 where icons 43, 44, 45, 74, 78 are stored. The ELD 30 is activated by a high voltage pulse generator 96, a row driver 98 and a column driver 100, as are well known for ELD's. The microcontroller 40 preferably includes additional working RAM 104.

In contrast to the embodiment shown in Figure 1, in the display unit 92, the FPGA 94 has sole direct access to the frame memory 36. In addition, it also has direct memory access to the flash memory 42, which was previously accessible only to the microcontroller 40. The microcontroller 40 is normally in control of the address and data bus to the flash memory 42, and the microcontroller grants access to the FPGA 94 after the FPGA 94 initiates a bus request, in the manner well known in the art. The FPGA 94 preferably generates additional text and graphics which may be overlayed or supplemented to the icons 43, 44, 45, 774, 78. The FPGA 94 preferably includes graphics and text generation algorithms. Thus, information such as text received via the bus 26 are generated into graphical text representations by the FPGA 94 and stored in the frame memory 36 along with the icons 43, 44, 45, 74, 78 to be displayed on the ELD 30. The FPGA 94 generates text, such as the fields 58, 60, 62 of Figure 2. Because the FPGA 94 directly accesses the flash memory 42, the display unit 92 has increased efficiency. Therefore, higher resolution icons 43, 44, 45 can be utilized, or alternatively, lower cost microcontroller 40 and FPGA 94 can be utilized. Additionally, since the FPGA 94 reduces the computational load on the microcontroller 40, the microcontroller 40 can also be of lower cost. In operation, the microcontroller 40 receives information via the vehicle bus 26 from the navigation system 24, the engine controller 48 and the user input switches 49. The operation of the display system 90 will be described with respect to information received from the navigation system 24, for illustrative purposes. Based upon the information received from the navigation system 24, microcontroller 40 indicates to the FPGA 94 a selected one of the plurality of first icons 43, a selected one of the plurality of second icons 44, and a selected one of the plurality of third icons 45, a selected one of the plurality of speed icons 74, and a selected one of the plurality of gage icons 78. An index or address of each of the selected first, second, third speed and gage icons are sent by the microcontroller 40 to the FPGA 94. In addition, some of the information received by the microcontroller 40 from the navigation system 24 via the vehicle bus 26, such as street names for fields 58, 62 and city names for field 60 (Figure 2) are sent in text format, such as ASCII, to the FPGA 94. The FPGA 94 then addresses the flash memory 42 to directly access the selected first, second, third speed and gage icons 43, 44, 45, 74, 78 and store them in appropriate locations in the frame memory 36.

It should be apparent that the FPGA 94 may alternatively be an ASIC, CPLD, PAL, GAL, ASSP, LSI, MSI, PLA, etc. The FPGA 94 may alternatively include a microprocessor or other controller or combination logic. Further, the microcontroller 40 and FPGA 94 may be integrated onto a single chip or into a multichip module.

It should be noted that the invention can be practiced otherwise than as specifically illustrated and described without departing from its scope.

### Abbreviations:

- ASCII:: American Standard Code for Information Interchange
- FPGA:: Field Programmable Gate Array
- ASIC:: Application Specific Integrated Circuit
- CPLD:: Complex Programmable Logic Device
- PAL:: Programmable Array Logic
- GAL:: Gate Array Logic
- ASSP:: Application Specific Standard Product
- LSI:: Large Scale Integration
- MSI:: Medium Scale Integration
- PLA:: Progammable Logic Array

## Claims

1. A display system (20, 90) comprising:
a vehicle bus communication link (26);
an input device (24, 49), providing information on said bus (26) ;
a display (30);
a local memory (42) separate from said bus and containing a plurality of icons (43-45);
a microcontroller (40) in communication with said bus (26) and connected to said local memory separately from said bus and arranged to receive said information from said bus (26), **characterised in that**
said microcontroller (40) is arranged to select at least one of said plurality of icons (43-45) from said local memory (42) based upon said information; and by
a frame memory (36) arranged to store said selected icons; and
an additional display controller (32,94) being arranged to control said display (30) in accordance with said stored icons.

2. A display system (20) as claimed in Claim 1 or claim 2 wherein each said icon (43-45) comprises a bitmapped graphic.

3. A display system (20) as claimed in Claim 1 or claim 2 wherein said display controller (94) selects one of said plurality of icons and wherein, preferably, said display controller (94) has direct memory access to said local memory (42).

4. A display system (20) as claimed in Claim 3 wherein said frame memory (36) is mapped to said display (30), said display (30) displaying according to said frame memory (36).

5. A display system (20) as claimed in Claim 3 or Claim 4 wherein said microcontroller (40) sends text information to said display controller (32,94), said display controller (32,94) converting said text information to a displayable format and wherein, preferably, said display controller (32,94) generates graphics utilizing graphic-generation algorithms.

6. A display system (20) as claimed in any of Claims 1 to 5 wherein said plurality of icons (43-45) stored on said local memory (42) comprises a plurality of first icons and a plurality of second icons (44), said microcontroller (40) selecting from among said plurality of first icons. (43) and from among said plurality of second icons (44) based upon said information, said display (30) simultaneously displaying said selected first icon (43) and said selected second icon (44).

7. A display system (20) as claimed in Claim 6 wherein said frame memory (36) is accessible by said display controller (32,94), said display controller (32,94) storing said selected first icon (43) and said selected second icon (44) in said frame memory (36), said frame memory (36) mapped to said display (30), said display (30) displaying the contents of said frame memory (36).

8. A display system (20) as claimed in claim 1 further comprising a display unit (22) comprising said local memory (42), said display controller (32) and said display (30) and wherein
said local memory (42) stores a plurality of first icons (43) and a plurality of second icons (44) ;
said display (30) includes a first display area (52) and a second display area (54);
said microcontroller (40) selects at least one of said plurality of first icons (43) and at least one of said plurality of second icons (44) from said local memory (42) based upon said information from said vehicle bus (26);
said display controller (32) sends said selected first (43) and second (44) icons to said display; and
said display (30) displays said selected first icon (43) in said first display area (52) and said selected second icon (44) in said second display area (54).

9. A display system as claimed in Claim 8 wherein said first (43) and second (44) icons comprise pixel-by-pixel information based upon which said display displays said first (43) and second (44) icons.

10. A display system as claimed in Claim 8 wherein said input device (24) includes a navigation system (24), each of said first icons (43) graphically indicating a type of intersection, said information from said navigation system (24) selecting one of said types of intersections to be displayed.

11. A display system as claimed in any of Claims 8-10 wherein said input device (24) includes a navigation system (24), said information indicating a geographical direction.

12. A display system as claimed in Claim 8 wherein said display controller (94) selects one of said plurality of first icons (43) and one of said plurality of second icons (44) and wherein, preferably, said display controller (94) has direct memory access to said local memory (42).

13. A display system as claimed in Claim 12 said frame memory (36) storing said selected first (43) and second (44) icons to be displayed on said display (30) and wherein, preferably, said frame memory (38) is mapped to said display (30), said display (30) displaying according to said frame memory (36).

14. A display system as claimed in any of claims 8-13 wherein said microcontroller (40) sends text based upon said information to said display controller (32,94), said display controller (32,94) converting said text to a displayable format .

## Patentansprüche

1. Anzeigesystem (20, 90), das Folgendes umfasst:
eine Fahrzeugbuskommunikationsverbindung (26);
eine Eingabevorrichtung (24, 49), die Informationen über den genannten Bus (26) liefert;
ein Display (30);
einen lokalen Speicher (42) separat von dem genannten Bus, der eine Mehrzahl von Icons (43-45) beinhaltet;
eine Mikrosteuerung (40) in Kommunikation mit dem genannten Bus (26), die mit dem genannten lokalen Speicher separat von dem genannten Bus verbunden ist und die Aufgabe hat, die genannten Informationen von dem genannten Bus (26) zu empfangen, **dadurch gekennzeichnet, dass**
die genannte Mikrosteuerung (40) die Aufgabe hat, wenigstens eines aus der genannten Mehrzahl von Icons (43-45) aus dem genannten lokalen Speicher (42) auf der Basis der genannten Informationen auszuwählen; und
ein Frame-Speicher (36) zum Speichern der genannten gewählten Icons vorgesehen ist; und
eine zusätzliche Anzeigesteuerung (32, 94) zum Steuern des genannten Displays (30) gemäß den genannten gespeicherten Icons vorgesehen ist.

2. Anzeigesystem (20) nach Anspruch 1 oder Anspruch 2, wobei jedes genannte Icon (43-45) eine Bitmap-Graphik umfasst.

3. Anzeigesystem (20) nach Anspruch 1 oder Anspruch 2, wobei die genannte Anzeigesteuerung (94) eines aus der genannten Mehrzahl von Icons auswählt und wobei die genannte Anzeigesteuerung (94) vorzugsweise direkt auf den genannten lokalen Speicher (42) zugreifen kann.

4. Anzeigesystem (20) nach Anspruch 3, wobei der genannte Frame-Speicher (36) auf das genannte Display (30) abgebildet wird, wobei das genannte Display (30) gemäß dem genannten Frame-Speicher (36) anzeigt.

5. Anzeigesystem (20) nach Anspruch 3 oder Anspruch 4, wobei die genannte Mikrosteuerung (40) Textinformationen zu der genannten Anzeigesteuerung (32, 94) sendet, wobei die genannte Anzeigesteuerung (32, 94) die genannten Textinformationen in ein anzeigefähiges Format umwandelt und wobei die genannte Anzeigesteuerung (32, 94) vorzugsweise Grafik unter Verwendung von Grafikerzeugungsalgorithmen erzeugt.

6. Anzeigesystem (20) nach einem der Ansprüche 1 bis 5, wobei die auf dem genannten lokalen Speicher (42) gespeicherte genannte Mehrzahl von Icons (43-45) eine Mehrzahl von ersten Icons und eine Mehrzahl von zweiten Icons (44) umfasst, wobei die genannte Mikrosteuerung (40) aus der genannten Mehrzahl von ersten Icons (43) und aus der genannten Mehrzahl von zweiten Icons (44) auf der Basis der genannten Informationen auswählt, wobei das genannte Display (30) gleichzeitig das genannte gewählte erste Icon (43) und das genannte gewählte zweite Icon (44) anzeigt.

7. Anzeigesystem (20) nach Anspruch 6, wobei die genannte Anzeigesteuerung (32, 94) auf den genannten Frame-Speicher (36) zugreifen kann, wobei die genannte Anzeigesteuerung (32, 94) das genannte gewählte erste Icon (43) und das genannte gewählte zweite Icon (44) in dem genannten Frame-Speicher (36) speichert, wobei der genannte Frame-Speicher (36) auf das genannte Display (30) abgebildet ist, wobei das genannte Display (30) den Inhalt des genannten Frame-Speichers (36) anzeigt.

8. Anzeigesystem (20) nach Anspruch 1, das ferner eine Anzeigeeinheit (22) umfasst, die den genannten lokalen Speicher (42), die genannte Anzeigesteuerung (32) und das genannte Display (30) umfasst, und wobei
der genannte lokale Speicher (42) eine Mehrzahl von ersten Icons (43) und eine Mehrzahl von zweiten Icons (44) speichert;
das genannte Display (30) einen ersten Anzeigebereich (52) und einen zweiten Anzeigebereich (54) aufweist;
die genannte Mikrosteuerung (40) wenigstens eines aus der genannten Mehrzahl von ersten Icons (43) und wenigstens eines aus der genannten Mehrzahl von zweiten Icons (44) aus dem genannten lokalen Speicher (42) auf der Basis der genannten Informationen von dem genannten Fahrzeugbus (26) auswählt;
die genannte Anzeigesteuerung (32) das genannte gewählte erste (43) und zweite (44) Icon zu dem genannten Display sendet; und
das genannte Display (30) das genannte gewählte erste Icon (43) in dem genannten ersten Anzeigebereich (52) und das genannte gewählte zweite Icon (44) in dem genannten zweiten Anzeigebereich (54) anzeigt.

9. Anzeigesystem nach Anspruch 8, wobei das genannte erste (43) und zweite (44) Icon Pixel-für-Pixel-Informationen auf der Basis davon umfasst, welches genannte Display das genannte erste (43) und zweite (44) Icon anzeigt.

10. Anzeigesystem nach Anspruch 8, wobei das genannte Eingabegerät (24) ein Navigationssystem (24) beinhaltet, wobei jedes der genannten Icons (43) grafisch einen Schnittpunkttyp anzeigt, wobei die genannte Information von dem genannten Navigationssystem (24) einen der genannten Schnittpunkttypen zum Anzeigen auswählt.

11. Anzeigesystem nach einem der Ansprüche 8-10, wobei das genannte Eingabegerät (24) ein Navigationssystem (24) beinhaltet, wobei die genannten Informationen eine geografische Richtung anzeigen.

12. Anzeigesystem nach Anspruch 8, wobei die genannte Anzeigesteuerung (94) eines aus der genannten Mehrzahl von ersten Icons (43) und eines aus der genannten Mehrzahl von zweiten Icons (44) auswählt und wobei die genannte Anzeigesteuerung (94) vorzugsweise direkt auf den genannten lokalen Speicher (42) zugreifen kann.

13. Anzeigesystem nach Anspruch 12, wobei der genannte Frame-Speicher (36) das gewählte erste (43) und zweite (44) Icon zur Anzeige auf dem genannten Display (30) speichert und wobei der genannte Frame-Speicher (38) vorzugsweise auf das genannte Display (30) abgebildet wird, wobei das genannte Display (30) gemäß dem genannten Frame-Speicher (36) anzeigt.

14. Anzeigesystem nach einem der Ansprüche 8-13, wobei die genannte Mikrosteuerung (40) Text auf der Basis der genannten Informationen zu der genannten Anzeigesteuerung (32, 94) sendet, wobei die genannte Anzeigesteuerung (32, 94) den genannten Text in ein anzeigefähiges Format umwandelt.

## Revendications

1. Un système d'affichage (20, 90) comprenant :
une liaison de communication par bus de véhicule (26);
un dispositif d'entrée (24, 49) fournissant des informations audit bus (26) ;
un écran (30);
une mémoire locale (42) distincte dudit bus et contenant une pluralité d'icônes (43 à 45) ;
un microcontrôleur (40) en communication avec ledit bus (26) et connecté à ladite mémoire locale séparément dudit bus et agencé de façon à recevoir lesdites informations dudit bus (26), **caractérisé par le fait que**
ledit microcontrôleur (40) est agencé de façon à sélectionner au moins une icône de ladite pluralité d'icônes (43 à 45) de ladite mémoire locale (42) en fonction desdites informations ; et par
une mémoire d'image (36) agencée de façon à stocker lesdites icônes sélectionnées ; et
un contrôleur d'affichage additionnel (32, 94) étant agencé de façon à commander ledit écran (30) conformément aux dites icônes stockées.

2. Un système d'affichage (20) selon la Revendication 1 ou 2 où chacune desdites icônes (43 à 45) comprend une image graphique en mode point.

3. Un système d'affichage (20) selon la Revendication 1 ou 2 où ledit contrôleur d'affichage (94) sélectionne une icône de ladite pluralité d'icônes et, où, de préférence, ledit contrôleur d'affichage (94) possède un accès direct à ladite mémoire locale (42).

4. Un système d'affichage (20) selon la Revendication 3 où ladite mémoire d'image (36) est mise en correspondance avec ledit écran (30), ledit écran (30) effectuant un affichage en fonction de ladite mémoire d'image (36).

5. Un système d'affichage (20) selon la Revendication 3 ou 4 où ledit microcontrôleur (40) envoie des informations textuelles audit contrôleur d'affichage (32, 94), ledit contrôleur d'affichage (32, 94) convertissant lesdites informations textuelles en un format affichable et où, de préférence, ledit contrôleur d'affichage (32, 94) générant des graphismes en utilisant des algorithmes de génération de graphismes.

6. Un système d'affichage (20) selon l'une quelconque des Revendications 1 à 5 où ladite pluralité d'icônes (43 à 45) stockée dans ladite mémoire locale (42) comprend une pluralité de premières icônes et une pluralité de deuxièmes icônes (44), ledit microcontrôleur (40) sélectionnant parmi ladite pluralité de premières icônes (43) et parmi ladite pluralité de deuxièmes icônes (44) en fonction desdites informations, ledit écran (30) affichant simultanément ladite première icône sélectionnée (43) et ladite deuxième icône sélectionnée (44).

7. Un système d'affichage (20) selon la Revendication 6 où ladite mémoire d'image (36) est accessible par ledit contrôleur d'affichage (32, 94), ledit contrôleur d'affichage (32, 94) stockant ladite première icône sélectionnée (43) et ladite deuxième icône sélectionnée (44) dans ladite mémoire d'image (36), ladite mémoire d'image (36) étant mise en correspondance avec ledit écran (30), ledit écran (30) affichant le contenu de ladite mémoire d'image (36).

8. Un système d'affichage (20) selon la Revendication 1 comprenant en outre une unité d'affichage (22) comprenant ladite mémoire locale (42), ledit contrôleur d'affichage (32) et ledit écran (30) et où
ladite mémoire locale (42) stocke une pluralité de premières icônes (43) et une pluralité de deuxièmes icônes (44) ;
ledit écran (30) comprend une première zone d'affichage (52) et une deuxième zone d'affichage (54) ;
ledit microcontrôleur (40) sélectionne au moins une icône de ladite pluralité de premières icônes (43) et au moins une icône de ladite pluralité de deuxièmes icônes (44) de ladite mémoire locale (42) en fonction desdites informations dudit bus de véhicule (26) ;
ledit contrôleur d'affichage (32) envoie lesdites première (43) et deuxième (44) icônes sélectionnées vers ledit écran ; et
ledit écran (30) affiche ladite première icône sélectionnée (43) dans ladite première zone d'affichage (52) et ladite deuxième icône sélectionnée (44) dans ladite deuxième zone d'affichage (54).

9. Un système d'affichage selon la Revendication 8 où lesdites première (43) et deuxième (44) icônes comprennent des informations pixel par pixel en fonction desquelles ledit écran affiche lesdites première (43) et deuxième (44) icônes.

10. Un système d'affichage selon la Revendication 8 où ledit dispositif d'entrée (24) comprend un système de navigation (24), chacune desdites premières icônes (43) indiquant graphiquement un type d'intersection, lesdites informations dudit système de navigation (24) sélectionnant un desdits types d'intersection à afficher.

11. Un système d'affichage selon l'une quelconque des Revendications 8 à 10 où ledit dispositif d'entrée (24) comprend un système de navigation (24), lesdites informations indiquant une direction géographique.

12. Un système d'affichage selon la Revendication 8 où ledit contrôleur d'affichage (94) sélectionne une icône de ladite pluralité de premières icônes (43) et une icône de ladite pluralité de deuxièmes icônes (44) et, où, de préférence, ledit contrôleur d'affichage (94) possède un accès direct à ladite mémoire locale (42).

13. Un système d'affichage selon la Revendication 12 où ladite mémoire d'image (36) stockant lesdites première (43) et deuxième (44) icônes à afficher sur ledit écran (30) et où, de préférence, ladite mémoire d'image (38) est mise en correspondance avec ledit écran (30), ledit écran (30) effectuant un affichage selon ladite mémoire d'image (36).

14. Un système d'affichage selon l'une quelconque des Revendications 8 à 13 où ledit microcontrôleur (40) envoie du texte en fonction desdites informations audit contrôleur d'affichage (32, 94), ledit contrôleur d'affichage (32, 94) convertissant ledit texte en un format affichable.
